# DEMANDE DE BREVET EUROPEEN

(11) **EP 3 622 818 A1**
(43) Date de publication de la demande: **18.03.2020**
(21) Numéro de dépôt: 19197178.7
(22) Date de dépôt: 13.09.2019
(51) Int. Cl.: A01M 7/00

(54) **ARTICULATION DE SEGMENTS DE BRAS DE RAMPE DE PULVERISATION**

(30) Priorité: 13.09.2018 FR 1858246
(71) Demandeur: Pommier - S.C.E.B.P., 28150 Eole-en-Beauce (FR)
(72) Inventeur: LASNE, Frédéric, 28360 MESNAY-LE-VIDAME (FR); POMMIER, Nicolas, 28150 EOLE-EN-BEAUCE (FR)
(74) Mandataire: Oudin, Stéphane

(57) **Abrégé**

La présente invention concerne une articulation (1) disposée entre deux segments (2,2',2") adjacents d'un bras (3) d'une rampe de pulvérisation, remarquable en ce qu'elle comporte une pluralité d'organes de liaison reliant entre elles les extrémités (21,22' ; 21',22") contigües de deux segments (2,2',2") adjacents, chaque organe de liaison étant assemblé, d'une part, à l'une de ses extrémités sur l'une (21 ou 22' ; 21' ou 22") desdites extrémités (21,22' ; 21',22") contigües par une liaison rotule et, d'autre part, à son autre extrémité sur l'autre (22' ou 21 ; 22" ou 21') desdites extrémités (21,22' ; 21',22") contigües par une liaison permettant, d'une part, le déplacement dudit organe de liaison par rapport à l'extrémité (22' ou 21 ; 22" ou 21') contigües associée selon une direction parallèle à l'axe longitudinal du segment (2,2',2") associé et, d'autre part, le blocage dudit organe de liaison dans une position déterminée.

## Description

### Domaine technique

La présente invention se rapporte au domaine général de l'agriculture. Elle vise plus précisément une articulation pour segments de bras d'une rampe de pulvérisation ou d'épandage granulaire ou liquide.

### Technique antérieure

Dans le domaine de l'agriculture, il est connu de traiter les cultures végétales pour lutter contre les insectes, les maladies ou encore les mauvaises herbes, afin de garantir un bon rendement de l'exploitation.

Pour ce faire, on utilise classiquement un pulvérisateur porté ou trainé par un tracteur, ou encore autopropulsé, et comportant au moins :
- une cuve contenant la bouillie liquide issue du mélange de produit phytosanitaire et d'eau,
- une rampe supportant des buses de pulvérisation et dépendant de la dimension de l'exploitation et du relief du terrain, et
- une pompe mettant sous pression la bouillie contenue dans la cuve et aspirant ladite bouillie pour l'envoyer vers la rampe et les buses, ladite pompe assurant un mélange homogène de la bouillie afin que sa concentration soit identique du début à la fin de la pulvérisation.

De manière classique, les rampes comportent deux bras articulés de part et d'autre de ladite cuve et munis chacun de plusieurs segments aptes à être repliés sur eux-mêmes durant le déplacement sur route de l'ensemble pulvérisateur - tracteur, et dépliés perpendiculairement à l'axe longitudinal du pulvérisateur pour répandre la bouillie par pulvérisation sur les cultures végétales à traiter.

Le principal inconvénient des rampes connues est lié au repliage des segments de leurs bras. En effet, pour permettre le déplacement sur route de l'ensemble pulvérisateur - tracteur, il est nécessaire que cet ensemble ne dépasse pas les dimensions hors-tout réglementaires des gabarits routiers, notamment en ce qui concerne les largeur et hauteur, afin pouvoir emprunter tous les itinéraires routiers et ne pas entrer dans la catégorie des transports exceptionnels, ce qui nécessiterait éventuellement l'utilisation d'un véhicule d'accompagnement.

### Exposé de l'invention

Le but de la présente invention est de proposer une articulation disposées entre deux segments de bras d'une rampe de pulvérisation solide, facile à mettre en oeuvre, permettant au moins deux modes de repliage de sorte à s'adapter aux dimensions hors-tout réglementaires des gabarits routiers du lieu d'utilisation de la rampe de pulvérisation.

Conformément à l'invention, il est donc proposer une articulation disposée entre deux segments adjacents d'un bras d'une rampe de pulvérisation, remarquable en ce qu'elle comporte une pluralité d'organes de liaison reliant entre elles les extrémités contigües de deux segments adjacents, chaque organe de liaison étant assemblé, d'une part, à l'une de ses extrémités sur l'une desdites extrémités contigües par une liaison rotule et, d'autre part, à son autre extrémité sur l'autre desdites extrémités contigües par une liaison permettant, d'une part, le déplacement dudit organe de liaison par rapport à l'extrémité contigüe associée selon une direction parallèle à l'axe longitudinal du segment associé et, d'autre part, le blocage dudit organe de liaison dans une position déterminée.

L'articulation comporte avantageusement quatre organes de liaison reliant entre elles chaque extrémité des bords supérieurs et inférieurs desdites extrémités contigües des deux segments adjacents du bras.

Chaque organe de liaison est de préférence une rotule comportant un corps recevant une douille palier, un anneau apte à pivoter selon les trois directions à l'intérieur de ladite douille palier et une tige filetée s'étendant perpendiculairement à l'axe de ladite douille palier et étant associée à au moins un écrou.

Chaque rotule est alors mise en place en mettant son corps dans une chape et en insérant sa tige filetée dans un tube, lesdits chape et tube étant respectivement fixés sur l'une des extrémités contigües de deux segments.

### Description sommaire des figures

D'autres avantages et caractéristiques ressortiront mieux de la description qui va suivre d'un mode d'exécution d'une articulation disposées entre deux segments de bras de rampe de pulvérisation selon l'invention en référence aux figures annexées sur lesquelles :
- la figure 1 est une vue en perspective d'un bras d'une rampe de pulvérisation muni d'articulations entre ses différents segments selon l'invention ;
- la figure 2 est une vue en perspective du bras de la figure 1 replié horizontalement ;
- la figure 3 est une vue en perspective du bras de la figure 1 replié verticalement ;
- la figure 4 est une vue en perspective du bras de la figure 1 replié verticalement selon un autre angle de vue ;
- la figure 5 est une vue de détail en perspective agrandie de l'extrémité d'un des segments du bras de la figure 1 recevant l'articulation selon l'invention ;
- la figure 6 est une vue de détail en perspective agrandie de l'extrémité de l'autre segment du bras de la figure 1 recevant l'articulation selon l'invention ;
- la figure 7 est une vue de détail en perspective agrandie de l'articulation reliant les extrémités des segments du bras des figures 5 et 6 ;
- la figure 8 est une vue de face agrandie d'un organe de liaison de l'articulation de la figure 7 ;
- la figure 9 est une vue en coupe agrandie de l'organe de liaison de la figure 8.

### Meilleure manière de réaliser l'invention technique

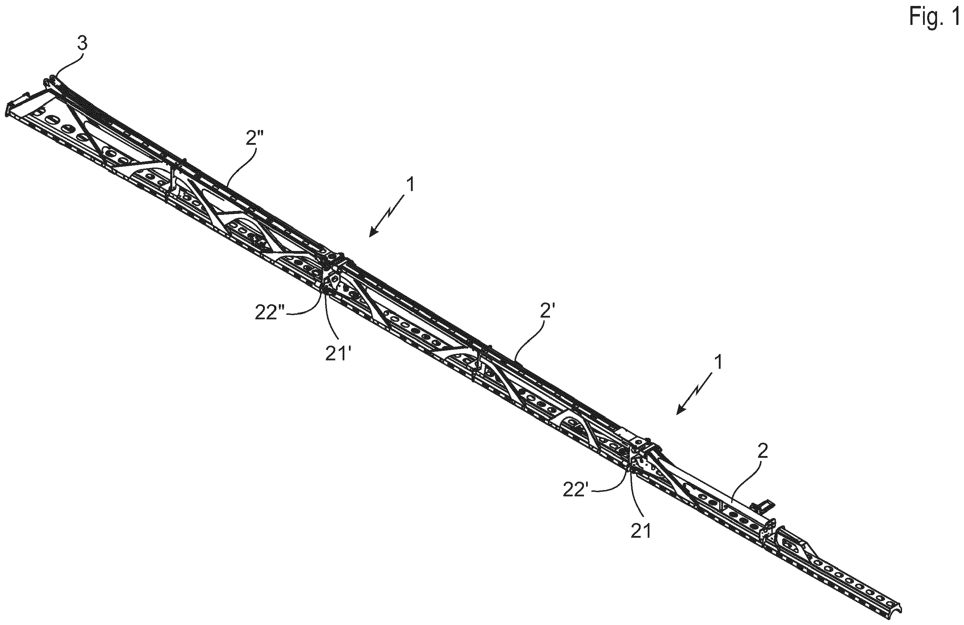

En référence aux figures 1 à 8, l'invention concerne une articulation 1 disposée entre deux segments 2,2',2" adjacents d'un bras 3 d'une rampe de pulvérisation, ledit bras comprenant au moins deux segments 2,2',2".

Chaque articulation 1 selon l'invention comporte une pluralité d'organes de liaison 4 reliant entre elles les extrémités 21,22' ; 21',22" contigües de deux segments 2,2',2" adjacents du bras 3, chaque organe de liaison 4 étant assemblé, d'une part, à l'une de ses extrémités sur l'une 21 ou 22' ; 21' ou 22" desdites extrémités 21,22' ; 21',22" par une liaison rotule et, d'autre part, à son autre extrémité sur l'autre 22' ou 21 ; 22" ou 21' desdites extrémités 21,22' ; 21',22" par une liaison permettant, d'une part, le déplacement dudit organe de liaison 4 par rapport à l'extrémité 22' ou 21 ; 22" ou 21' associée selon une direction avantageusement parallèle à l'axe longitudinal du segment 2,2',2" associé et, d'autre part, le blocage dudit organe de liaison 4 dans une position déterminée.

Chaque articulation 1 comporte avantageusement deux organes de liaison 4 reliant entre elles chaque extrémité d'un des bords verticaux desdites extrémités 21,22' ; 21',22" contigües des deux segments 2,2',2" adjacents du bras 3, chacune des extrémités de l'autre bord vertical de l'une desdites extrémités 21,22' ; 21',22" contigües recevant alors avantageusement une butée mécanique, non représentée, apte à être en contact avec l'autre desdites extrémités 21,22' ; 21',22" lorsque le bras 3 est en position déplié (Cf. figure 1).

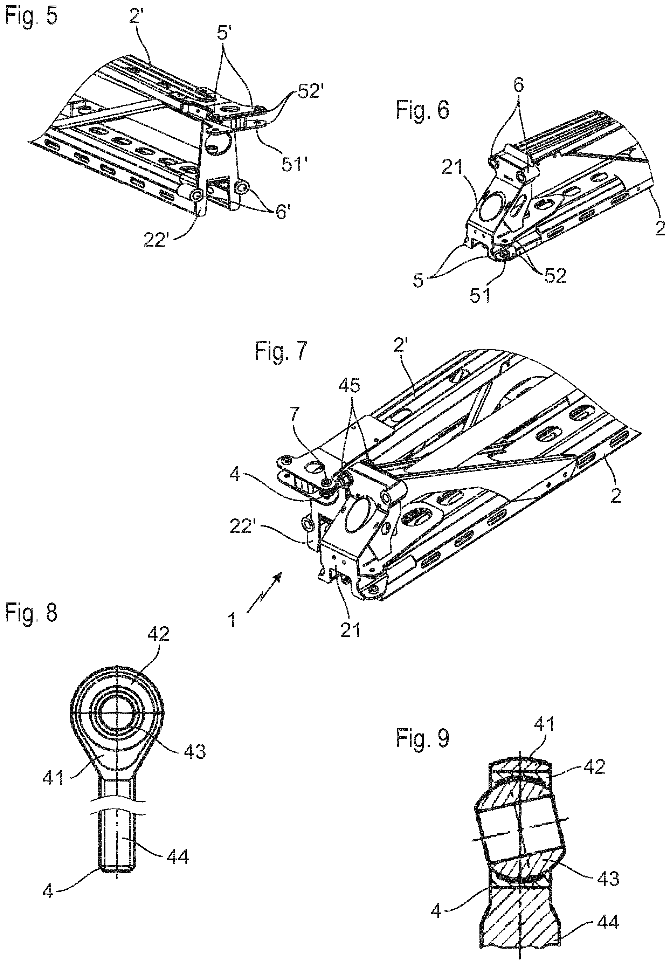

En référence aux figures 8 et 9, chaque organe de liaison 4 est de préférence une rotule du commerce comportant un corps 41 recevant une douille palier 42, un anneau 43 apte à pivoter selon les trois directions à l'intérieur dudit palier 42 et une tige filetée 44 s'étendant perpendiculairement à l'axe de ladite douille palier 42 et étant associée à au moins un écrou 45.

Ainsi en référence aux figures 5 à 7, chaque rotule 4 est alors mise en place en mettant son corps 41 dans une chape 5,5' et en insérant sa tige filetée 44 dans un tube 6,6', lesdits chape 5,5' et tube 6,6' étant respectivement fixés sur l'une des extrémités 21,22' ; 21',22" contigües respectives de deux segments 2,2',2" adjacents du bras 3.

Pour maintenir le corps 41 en place dans la chape 5' associée, l'articulation 1 comporte en outre un axe 7' apte à être inséré simultanément dans l'anneau 43 de la rotule 4 et dans un orifice 51' aménagé dans chacune des ailes 52' de ladite chape 5' (Cf. figure 7). Il va de soi qu'un axe, non représenté, est également prévu au niveau de la chape 5.

Une fois sa tige filetée 44 insérée dans le tube 6, chaque rotule 4 est immobilisée par un écrou 45 vissé sur ladite tige filetée 44 de part et d'autre du tube 6 (Cf. figure 7). On comprend bien que le premier écrou 45 sera vissé sur la tige filetée 44 avant l'insertion de cette dernière dans le tube 6' associé.

Selon un mode de réalisation avantageux, l'une 21,21' des extrémités 21,22' ; 21',22" contigües de deux segments 2,2',2" adjacents du bras 3 comporte un tube 6 disposé à chaque extrémité de son bord supérieur et une chape 5 à chaque extrémité de son bord inférieur, l'autre extrémité 22',22" comporte alors un tube 6' disposé à chaque extrémité de son bord inférieur et une chape 5' à chaque extrémité de son bord supérieur.

Il va de soi que les chape 5,5' et tube 6,6' pourront être disposés d'une tout autre manière, sans sortir du cadre de la présente invention.

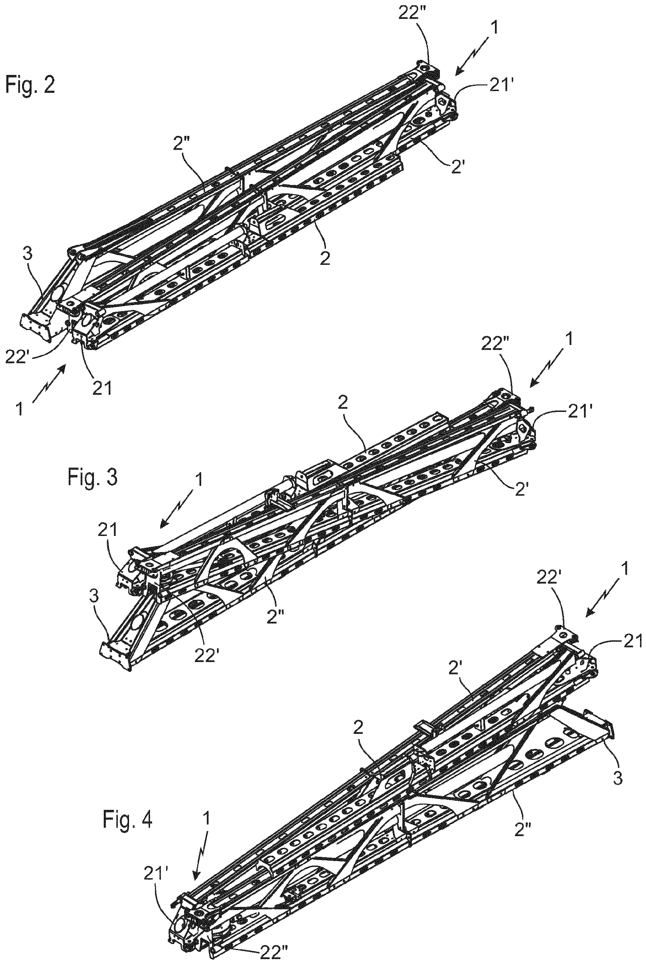

Avec cette configuration de l'articulation 1 selon l'invention, pour replier les segments 2,2',2" conformément à la figure 2, il faut, d'une part, sur l'articulation 1 disposée entre les segments 2,2' positionner les deux rotules 4 situés à chaque extrémité d'un des bords verticaux de l'extrémité 21 ou 22' et, d'autre part, sur l'articulation 1 disposée entre les segments 2',2" positionner les deux rotules 4 situés à chaque extrémité du bord vertical de l'extrémité 21' ou 22" situé du côté opposé par rapport audit bord vertical de l'extrémité 21 ou 22'.

Ainsi, on peut replier le bras 3 de manière à ce que les axes longitudinaux des segments 2,2',2" forment globalement un Z en vue de dessus, lesdits segments 2,2',2" étant disposés les uns à la suite des autres, leur faces inférieures appartenant alors à un même plan sensiblement horizontal.

Ce mode de repliage, qui est relativement classique, présente l'inconvénient d'être plutôt encombrant en largeur.

En référence aux figures 3 et 4, l'articulation 1 selon l'invention présente l'avantage de permettre de replier le bras 3 de manière à ce qu'une fois le bras 3 replié le segment 2 est disposé au moins en partie au-dessus du segment 2". Ce mode de repliage est particulièrement intéressant car il diminue significativement la largeur du bras 3 replié.

Ainsi, pour permettre ce dernier mode de repliage, il faut, d'une part, sur l'articulation 1 disposée entre les segments 2,2' positionner les deux rotules 4 situés à chaque extrémité d'un des bords verticaux de l'extrémité 21 ou 22' et, d'autre part, sur l'articulation 1 disposée entre les segments 2',2" positionner les deux rotules 4 à chaque extrémité du bord vertical de l'extrémité 21' ou 22" situé du même côté que ledit bord vertical de l'extrémité 21 ou 22'.

Ensuite, il faut agir sur les rotules 4 restantes en les déplaçant par rapport à leur tube 5,5' de sorte à rapprocher les bords supérieurs des extrémités 21,22' ; 21',22" contigües de deux segments 2,2',2" et/ou à éloigner les bords inférieurs desdites extrémités 21,22' ; 21',22".

Ces configurations des rotules 4 sont de préférence réglées au moment de la fabrication du bras 3.

Par ailleurs, le repliage/dépliage du bras 3 est avantageusement réalisé par des vérins, non représentés, solidarisés entre deux segments 2,2',2" adjacents dudit bras 3 et aptes à replier ou déplier lesdits segments 2,2',2" adjacents jusqu'à ce que l'un desdits segments 2,2',2" vienne en contact direct ou non avec l'autre segment 2,2',2".

### Possibilité d'application industrielle

L'articulation 1 selon l'invention s'applique plus particulièrement à la jonction des segments d'un bras de rampe de pulvérisation ou d'épandage granulaire ou liquide pour permettre leur repliage/dépliage, mais elle pourra également être utilisée pour permettre le pivotement du bras lui-même.

Par ailleurs, l'articulation 1 selon l'invention pourra également être mise en oeuvre sur tout type de bras ou dispositif munis de plusieurs segments aptes à être repliés sur eux-mêmes.

Enfin, il va de soi que les exemples d'articulations 1 conformes à l'invention qui viennent d'être décrits ne sont que des illustrations particulières, en aucun cas limitatives de l'invention.

## Revendications

1. Articulation (1) disposée entre deux segments (2,2',2") adjacents d'un bras (3) d'une rampe de pulvérisation, **caractérisée en ce qu'**elle comporte une pluralité d'organes de liaison (4) reliant entre elles les extrémités (21,22' ; 21',22") contigües de deux segments (2,2',2") adjacents, chaque organe de liaison (4) étant assemblé, d'une part, à l'une de ses extrémités sur l'une (21 ou 22' ; 21' ou 22") desdites extrémités (21,22' ; 21',22") contigües par une liaison rotule et, d'autre part, à son autre extrémité sur l'autre (22' ou 21 ; 22" ou 21') desdites extrémités (21,22' ; 21',22") contigües par une liaison permettant, d'une part, le déplacement dudit organe de liaison (4) par rapport à l'extrémité (22' ou 21 ; 22" ou 21') contigües associée selon une direction parallèle à l'axe longitudinal du segment (2,2',2") associé et, d'autre part, le blocage dudit organe de liaison (4) dans une position déterminée.

2. Articulation (1) selon la revendication 1 **caractérisée en ce qu'**elle comporte deux organes de liaison (4) reliant entre elles chaque extrémité des bords supérieurs et inférieurs desdites extrémités (21,22' ; 21',22") contigües des deux segments (2,2',2") adjacents du bras (3).

3. Articulation (1) selon l'une quelconque des revendications 1 ou 2 **caractérisée en ce que** chaque organe de liaison (4) est une rotule comportant un corps (41) recevant une douille palier (42), un anneau (43) apte à pivoter selon les trois directions à l'intérieur de ladite douille palier (42) et une tige filetée (44) s'étendant perpendiculairement à l'axe de ladite douille palier (42) et étant associée à au moins un écrou (45).

4. Articulation (1) selon la revendication 3, **caractérisée en ce que** chaque rotule (4) est alors mise en place en mettant son corps (41) dans une chape (5,5') et en insérant sa tige filetée (44) dans un tube (6,6'), lesdits chape (5,5') et tube (6,6') étant respectivement fixés sur l'une des extrémités (21,22' ; 21',22") contigües de deux segments (2,2',2").
